# EUROPÄISCHE PATENTSCHRIFT

(11) **EP 1 056 543 B1**
(45) Veröffentlichungstag und Bekanntmachung des Hinweises auf die Patenterteilung: **14.12.2005**
(21) Anmeldenummer: 99973394.2
(22) Anmeldetag: 30.11.1999
(51) Int. Cl.: B03B 5/32, B29B 17/02

(54) **VORRICHTUNG UND VERFAHREN ZUR TRENNUNG VON ZERKLEINERTEN KUNSTSTOFFGEMISCHEN UND ANMAISCHBEHÄLTER DAFÜR**
DEVICE AND METHOD FOR SEPARATING COMMINUTED PLASTIC MIXTURES AND SLURRY CONTAINER THEREFOR
DISPOSITIF ET PROCEDE POUR LA DIVISION DE MELANGES DE MATIERES PLASTIQUES BROYEES, ET CONTENANT DE BRASSAGE UTILISE A CET EFFET

(30) Priorität: 16.12.1998 CH 249198
(43) Veröffentlichungstag der Anmeldung: 06.12.2000
(73) Patentinhaber: Vogt-Plastic GmbH, 79736 Rickenbach (DE)
(72) Erfinder: VOGT, Joseph, Fridolin, D-79736 Rickenbach (DE)
(74) Vertreter: Isler & Pedrazzini AG
(86) Internationale Anmeldenummer: PCT/IB1999/001901
(87) Internationale Veröffentlichungsnummer: WO 2000/035587

(56) Entgegenhaltungen:
- EP-A- 0 791 396
- EP-A- 0 853 978
- DE-A- 4 405 903
- A. LAPPE ET AL.: "Werkstoffliches Recycling von Altkunststoffen-Technologie und Awendungen, Teil 1" PLASTVERARBEITER., Bd. 45, Nr. 5, Mai 1994 (1994-05), Seiten 32-37, XP000442495 ZECHNER UND HUETHIG VERLAG GMBH. SPEYER/RHEIN., DE ISSN: 0032-1338

## Beschreibung

### TECHNISCHES GEBIET

Die vorliegende Erfindung bezieht sich auf das Gebiet der Auftrennung von Kunststoffgemischen, insbesondere von Kunststoffgemischen, wie sie beim Recycling von Haus- und Industrieabfällen anfallen. Sie betrifft einen Anmaischbehälter, eine Vorrichtung mit einem solchen Anmaischbehälter und einer auf Dichtetrennung beruhenden Zentrifuge, sowie ein Verfahren zur Beschickung der Zentrifuge mit zerkleinerten Kunststoffteilen, die in der Zentrifuge aufgrund ihrer unterschiedlichen Dichte, insbesondere Schwimmfähigkeit, aufgetrennt werden.

### STAND DER TECHNIK

Im Rahmen der allgemeinen Bestrebungen der Wiederverwertung von Materialien werden zunehmend Kunststoff- und Metallabfälle gesondert gesammelt. So wird beispielsweise in Deutschland alles recyclierbare Material mit Ausnahme von Papier und Karton im sogenannten "Gelben Sack" gesammelt und von den Abfuhrunternehmen in gesonderten Fahrten eingesammelt. Dabei fällt in den "Gelben Säcken" ein ungeordnetes Gemisch von Styropor, Plastik, Aluminium, Blech etc. an. Zur Wiederverwertung dieser Materialien muss das Gemisch sortiert und die verschiedenen Komponenten möglichst sauber aufgetrennt werden.

In einem ersten Schritt wird der Inhalt der "Gelben Säcke" teils manuell, teils mit Unterstützung automatisierter physikalischer Vorgänge in eine Metallfraktion und in normalerweise vier Kunststofffraktionen aufgetrennt, wovon eine Fraktion Hohlkörper (z.B. Flaschen), eine Fraktion Folien, eine Fraktion Becher und eine vierte Fraktion den Rest umfasst. Die vier Kunststofffraktionen werden anschliessend zunächst separat zu grossen Ballen gepresst, damit sie für die weitere Auftrennung und Recyclierung zu spezialisierten Unternehmen transportiert und dort weiterverarbeitet werden können.

Die Kunststoffpressballen und die darin enthaltenen Kunststoffkomponenten werden unter anderem in einem Verfahren unter Verwendung von Dichtetrennung in zwei Fraktionen aufgetrennt, von denen zumindest eine anschliessend zu einem wiederverwertbaren Basisprodukt wie z.B. zu Kunststoffgranulat weiterverarbeitet wird.

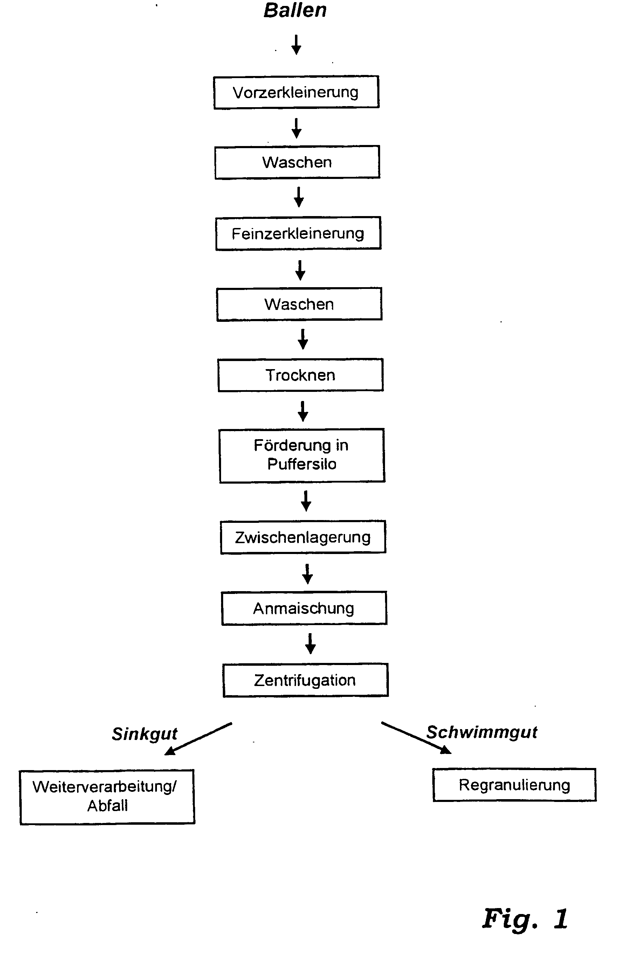

Ein typisches Verfahren nach dem Stand der Technik zur Verarbeitung und Auftrennung solcher Pressballen ist in einem Flussdiagramm in Figur 1 dargestellt und soll in der Folge kurz beschrieben werden. Bei diesem Verfahren werden die gepressten Kunststoffballen über ein Förderband einem Shredder zugeführt, in welchem die Ballen vorzerkleinert werden. Die vorzerkleinerten Kunststoffteile werden anschliessend mit einer Dosierschnecke in ein erstes Waschbad befördert, in diesem mechanisch und gegebenenfalls auch unter Zuhilfenahme von Reinigungsmitteln gereinigt. Absinkende Schwerabfälle werden dabei ausgesondert, und das vorgereinigte, vorzerkleinerte Kunststoffgemisch wird danach einer Mühle zugeführt, in welcher eine Feinzerkleinerung stattfindet. Das feinzerkleinerte Gut wird in der Folge je nach Bedarf einem zweiten Waschvorgang unterzogen, auf jeden Fall aber in einem Turbotrockner getrocknet und anschliessend mit einem Fördergebläse in ein Puffersilo befördert, in welchem das nun trockene, gereinigte und feinzerkleinerte Kunststoffgemisch zwischengelagert wird. Diese Zwischenlagerung und die damit verbundene Pufferung ist notwendig, da die diskontinuierliche Zuführung der Ballen auch zu grossen Schwankungen des Stroms an Kunststoffgemisch führen kann, die Beschikkung einer auf Dichtetrennung beruhenden Zentrifuge in der Regel aber einen sehr konstanten und wohldosierten Zuführungsstrom erfordert. Wird nämlich eine solche Zentrifuge (z.B. eine Doppelkonus-Vollmantel-Schneckenzentrifuge; wie sie von der Firma KHD Humbold Wedag AG, D-51057 Köln, unter der Marke CENSOR® hergestellt wird) mit einem stark diskontinuierlichen Strom von Kunststoffgemisch beschickt, so führt dies zu Verstopfungen und ineffizienter Trennung und in der Folge häufig zu unwirtschaftlichen Betriebsunterbrüchen.

Dem Puffersilo wird nun das Kunststoffgemisch entnommen und in dosierter und kontinuierlicher Weise einem kleinen Anmaischbehälter von ca. 2m³ Volumen zugeführt, in welchem das Gemisch mit Rührvorrichtungen in einer Trennflüssigkeit (im wesentlichen Wasser) zu einer Suspension aufgerührt wird. Vorraussetzung für eine z. B. durch Wägung ausgeführte, genügend genaue und damit auch konstante Dosierung ist, dass das aus dem Puffersilo entnommene Kunsstoffgemisch ausreichend trocken ist.

Eine Aufgabenpumpe befördert die in dem Anmaischbehälter hergestellte Suspension in einem weiteren Schritt in die Zentrifuge, in welcher das Gemisch infolge der unterschiedlichen Dichte von unterschiedlichen Kunststoffarten aufgetrennt wird. Sinkgut und Schwimmgut werden separat an der Zentrifuge abgegriffen und können anschliessend weiterverarbeitet werden, wobei z.B. eine Trocknung und eine Regranulierung der Fraktionen erfolgt. Das Zirkulationsgut (Zentrat), d.h. die von den Kunststoffpartikeln befreite Trennflüssigkeit wird in einem speziellen Zentratbehälter unterhalb der Zentrifuge aufgefangen und von dort z.T. in den Anmaischbehälter zurückgepumpt.

Am Sinkgut- sowie am Schwimmgutausgang sind bei Zentrifugen der vorgenannten Art üblicherweise auch noch gesteuerte Schieber vorgesehen um zu verhindern, dass beim An- und Herunterfahren der Zentrifuge konstruktionsbedingt dort anfallende Trennflüssigkeit austreten und mit dem zuvor abgtrennten Kunsstoffmaterial wieder in Berührung kommen kann.

Im Zusammenhang mit dem Stand der Technik ist insbesondere auf das Dokument EP-A-0853978 hinzuweisen, in welchem ein Verfahren und eine Anlage zur Aufbereitung von kunststoffreichen Müllgemischen beschrieben wird. Dabei wird insbesondere vorgeschlagen, nach der Zerkleinerung der kunststoffreichen Müllgemische auf kleiner als ca. 12 mm das Müllgemisch in einem Nasssilo zu befeuchten, anschliessend mechanisch aufzuschliessen und dann in einer Sortierzentrifuge nach Dichte zu trennen, wobei eine verschmutzungsfreie Kunststofffraktion erhalten wird.

### DARSTELLUNG DER ERFINDUNG

Die Erfindung stellt eine Vorrichtung gem. Hauptanspruch zur Verfügung. Die Vorrichtung umfasst einen Anmaischbehälter zur Beschickung wenigstens einer auf Dichtetrennung beruhenden Zentrifuge mit einer Suspension aus Wasser und zerkleinertem Kunststoffgemisch zur Verfügung, welcher sich dadurch auszeichnet, dass er eine Grösse im Bereich von 5 bis 500 m³ insbesondere bevorzugt einer Grösse im Bereich von 15 bis 40 m³ pro Tonne Zentrifugendurchsatz an Kunststoffgemisch pro Stunde aufweist. Diese grosse Dimensionierung des Anmaischbehälters macht es möglich, dass auf ein Puffersilo verzichtet werden kann, da die Pufferung der Diskontinuitäten im zugeführten Kunststoffgemischstrom durch die Grösse des Anmaischbehälters übernommen wird. Sowohl die Dosierung als auch die Kontinuität der Beschickung der Zentrifugen kann so gewährleistet werden. Zusätzlich ergibt sich aus der grössenbedingt langen Verweilzeit des Kunststoffgemisches im Anmaischbehälter ein Wascheffekt der Kunststoffpartikel, so dass auf einen weiteren, insbesondere vorgängigen Waschvorgang verzichtet werden kann. Die notwendige Grösse des Anmaischbehälters bemisst sich am Durchsatz der Zentrifuge, da dieser die Grösse des Durchflusses und die dafür notwendige Pufferung des zugeführten Stroms an Kunststoffgemisch bestimmt.

Eine erste bevorzugte Ausführungsform des erfindungsgemässen Anmaischbehälters ist dadurch gekennzeichnet, dass wenigstens ein Rührwerk vorgesehen ist, mit welchem das zerkleinerte Kunststoffgemisch im Anmaischbehälter aufgerührt werden kann, oder dass anstelle oder zusätzlich wenigstens eine Waschpumpe angeordnet ist, welche das im Anmaischbehälter befindliche Fluid im oberen Bereich ansaugt und im unteren Bereich des Bodens durch ein Einpumprohr wieder in den Anmaischbehälter einpumpt, wobei insbesondere bevorzugt bei der Ausgangsöffnung des Einpumprohrs eine Prallwand angeordnet ist, auf welche das eingepumpte Fluid auftrifft. Durch diesen Energieeintrag in den Anmaischbehälter wird eine kontrollierte Suspendierung und ein zusätzlicher Wascheffekt bewirkt.

Eine zweite Ausführungsform des erfindungsgemässen Anmaischbehälters zeichnet sich dadurch aus, dass das Abgreifen der Suspension zur Beschickung der Zentrifuge im Bereich seines Bodens, insbesondere bevorzugt des tiefsten Punktes des Bodens erfolgt. Dies hat einerseits den Vorteil, dass Schmutz oder sonstige schwere Partikel, welche in den Anmaischbehälter gelangen, sich am Boden des Behälters nicht kumulativ ansammeln sondern laufend über die Zentrifuge mit abgeführt werden. Die Zentrifuge wird derart auch als eine Art Waschaggregat eingesetzt. Andererseits ergibt sich aus dieser Anordnung, dass eine kontrollierte und dosierte Suspension abgegriffen werden kann, da sich im unteren Bereich durch entsprechend geregeltes Umwälzen des Inhalts des Anmaischbehälters und weil die Kunststoffe meist eine geringere Dichte als Wasser haben, eine kontrollierte Suspension im Bodenbereich einstellen lässt. Ausserdem ist es durch diese Anordnung auch möglich, bei Abschalten der Umwälzung und/oder der Rührmittel im wesentlichen partikelfreie Flüüsigkeit aus dem Anmaischbehälter abzugreifen, woraus sich weitere verfahrenstechnische Vorteile insbesondere beim Abfahren und Abstellen der Zentrifuge ergeben. Schiesslich lässt sich der Anmaischbehälter beispielsweise auch so gestalten, dass der Boden wenigstens teilweise konisch nach unten hin zulaufend ausgebildet ist, und dass zum Abgreifen der Suspension ein Ansaugrohr angeordnet ist, welches die Suspension im zentralen, tiefsten Bereich der Spitze dieses Konus ansaugt.

Die Erfindung betrifft des weiteren eine Vorrichtung zur Auftrennung von Kunststoffgemischen unter Verwendung eines obenerwähnten Anmaischbehälters sowie einer auf Dichtetrennung beruhenden Zentrifuge, insbesondere einer Doppelkonus-Vollmantel-Schneckenzentrifuge der bereits erwähnten Art. Bei der erfindungsgemässen Vorrichtung ist der Anmaischbehälter unterhalb, vorzugsweise direkt unterhalb, der wenigstens einen Zentrifuge angeordnet, so dass aus der Zentrifuge auslaufendes Zirkulationsgut (Zentrat) und/oder beim An- und Abfahren der Zentrifuge an deren Ausgängen (Sinkgut- sowie Schwimmgutausgang) anfallende Trennflüssigkeit durch die Schwerkraft nach unten in den Anmaischbehälter fliessen kann. Aus dieser speziellen Anordnung von Anmaischbehälter und Zentrifuge ergeben sich die Vorteile, dass auf Leitungen, zumindest auf lange Leistungen, auf aktive Förderung, auf Schieber und Siebe etc. sowie auf Kontrollelemente dafür verzichtet werden kann.

Zur Abführung des Schwimmguts vom Schwimmgutaugang der Zentrifuge kann bei der erfindsgemässen Vorrichtung eine vorzugsweise reversierbare Schwimmgutschnecke vorgesehen sein und entsprechend eine Sinkgutschnecke zur Abführung des Sinkguts von ihrem Sinkgutausgang.

Die Erfindung betrifft auch noch ein Verfahren zur Beschickung wenigstens einer auf Dichtetrennung beruhenden Zentrifuge unter Verwendung einer obengenannten Vorrichtung, welches dadurch charakterisiert ist, dass beim Anfahren der Zentrifuge der Inhalt des Anmaischbehälters im wesentlichen ohne Durchmischung gehalten wird, derart, dass das Kunststoffgemisch im oberflächennahen Bereich schwimmt, und dass zur Beschickung der Zentrifuge im Bereich des Bodens des Anmaischbehälters über ein Ansaugrohr im wesentlichen kunststoffgemischfreies Wasser abgegriffen wird. Da für das Anfahren der Zentrifuge kunststoffgemischfreies Wasser notwendig ist, erweist sich das Abgreifen im Bodenbereich bei gleichzeitigem Ausschalten der Umwälzung und/oder der Rührmittel als vorteilhaft und erspart einen separaten, für das Anfahren bestimmten Wasseranschluss.

Eine weitere Ausführungsform des Verfahrens zeichnet sich dadurch aus, dass beim Anfahren oder Runterfahren der Zentrifuge die hierbei an ihren Ausgängen konstruktionsbedingt anfallende Trennflüssigkeit einfach in den Anmaischbehälter zurückgeleitet wird und dass zur Ermöglichung oder Unterstützung dieser Rückleitung die vorerwähnten Schnecken, mit welchen die Fraktionen bei den Enden der Zentrifugen bevorzugt abgeführt werden, reversiert werden.

Weitere bevorzugte Ausführungsformen des Anmaischbehälters, der Vorrichtung zur Auftrennung von Kunststoffgemischen und des Verfahrens ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Zeichnungen näher erläutert werden.
- Fig. 1: zeigt ein Flussdiagramm des Verfahrens zur Zerkleinerung und Auf- trennung von Kunststoffgemischen nach dem Stand der Technik;
- Fig. 2: zeigt ein Flussdiagramm des vorgeschlagenen Ablaufs zur Zerklei- nerung und Auftrennung von Kunststoffgemischen;
- Fig. 3: zeigt eine detaillierte schematische Darstellung des Ablaufs von Zuführung und Auftrennung, der dabei verwendeten Komponenten und deren Anordnung; und
- Fig. 4: zeigt einen Flüssigkeitsbehälter, wie er dabei eingesetzt werden kann.

### WEGE ZUR AUSFÜHRUNG DER ERFINDUNG

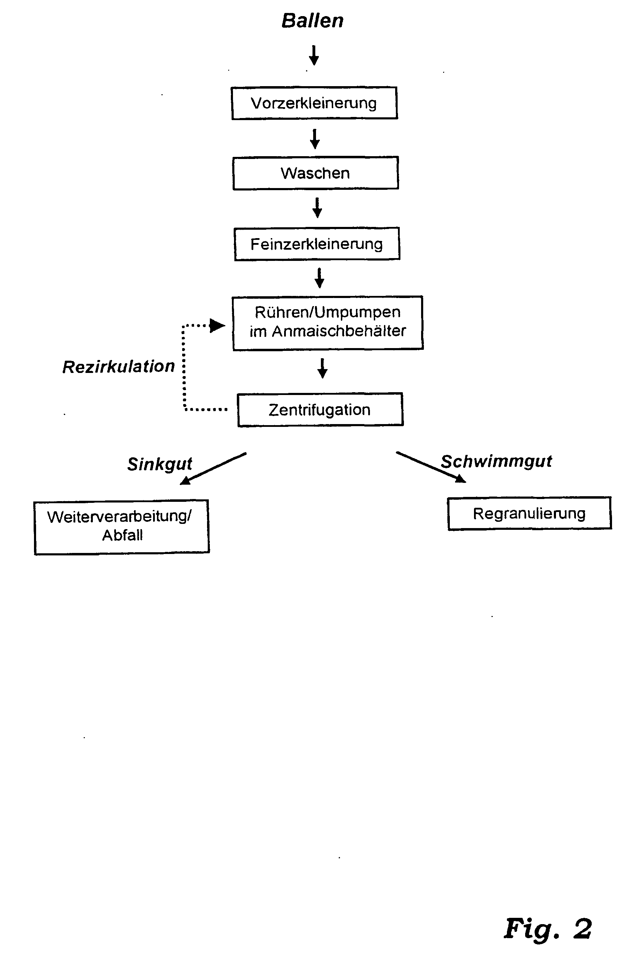

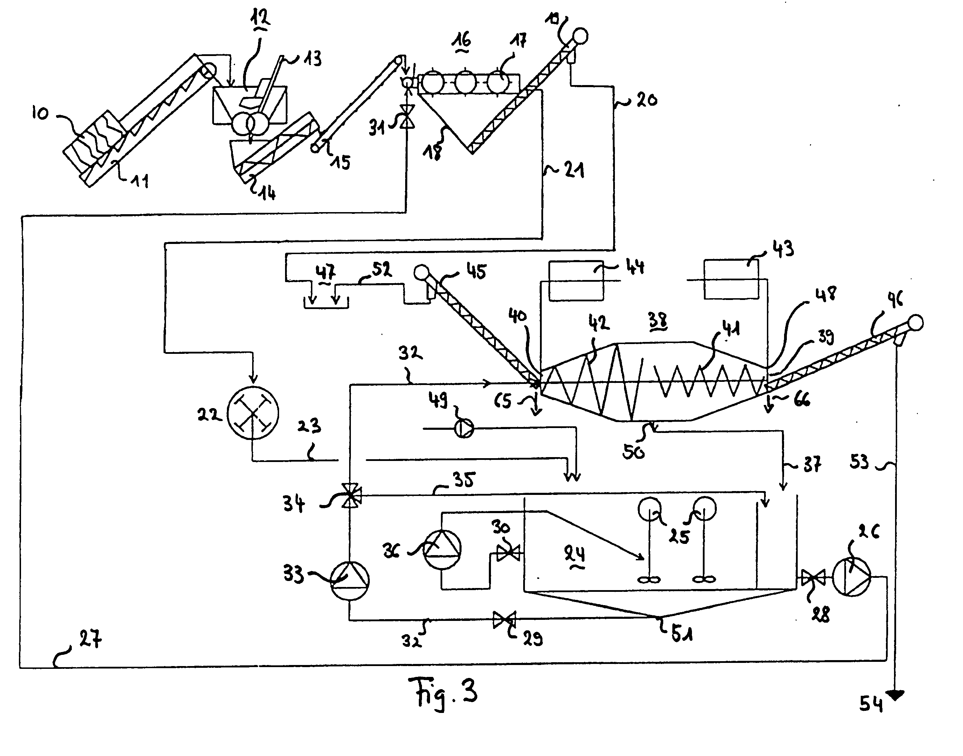

Figur 2 zeigt eine grobe schematische Darstellung des Ablaufs zur Verarbeitung und Auftrennung von gepressten Kunststoffballen, insbesondere aus der Folienfraktion, unter Verwendung der vorgeschlagenen Komponenten, die gesamthaft in Fig.3 dargestellt sind. Die Ballen werden vorzerkleinert und gewaschen und das Kunststoffgemisch gelangt nach einer Feinzerkleinerung unmittelbar in einen Anmaischbehälter. Der vorgeschlagene Anmaischbehälter erlaubt nun eine direkte Beschickung einer Zentrifuge mit der im Anmaischbehälter in Wasser suspendierten Kunststoffgemisch. Als Ganzes wird das Verfahren nach dem Stand der Technik, wie in Figur 1 dargestellt, durch die vorgeschlagenen Änderungen stark vereinfacht und es sind Einsparungen an Leitungen, Pumpen, Schiebern, Sieben und weiteren Komponenten möglich. Solche Einsparungen führen in der Folge zu kleineren Investitionskosten und zu geringerer Störungsanfälligkeit.

Im Detail ist der vorgeschlagene Aufbau einem grossen Anmaischbehälter 24 als einem zentralem Element schematisch in Figur 3 dargestellt. Die zugeführten Pressballen 10 aus Kunststoffabfällen werden von einem Ballenförderer 11 (z.B. Firma Stöber, Typ FDS 4040/B) erfasst und zum Trichter eines oder mehrerer Shredder 12 (z.B. ABB, ACS601-0030-3 mit DTC Regelung) befördert. Die Pressballen 10 werden von einem Niederdrückerhydraulikaggregat 13 in den Shredder 12 hineingepresst und in diesem vorzerkleinert auf eine Teilchengrösse im Bereich von einigen Millimetern Durchmesser. Das so vorzerkleinerte Gut wird von einer Dosierschnecke mit Gewichtserfassung 14 (z.B. Stöber, FDS 4040/B) aufgefangen, in grob dosierter Form einem Förderband 15 übergeben und von diesem Förderband 15 in ein Waschbad 16 befördert. In diesem Waschbad 16 werden die vorzerkleinerten Kunststoffteile von Paddelwalzen 17 bewegt, so dass sich Schmutzablagerungen von den Teilen ablösen können. Da die Dichte der Kunststoffteile meist kleiner als diejenige von Wasser ist, schwimmen die Kunststoffteile obenauf, und sich absenkender Schwergutabfall 20 kann einfach in einer Schwergutrinne 18 (z.B. Stöber, FDS 4040/B) gesammelt, und von einer Schwergutschnecke 19 zu einem Behälter 47 für Schwergut befördert werden. Die gewaschenen Grobteile 21 werden nun aus dem Waschbad 16 abgeleitet und einer Mühle 22 zugeführt, in welcher die Feinzerkleinerung stattfindet. Es kann sich bei der Mühle 22 um eine Waschmühle handeln, die neben den gewaschenen Grobteilen 21 auch mit Flüssigkeit beaufschlagt wird. Praktischerweise kann dabei diese Flüssigkeit direkt dem Anmaischbehälter 24 entnommen werden. Die aus der Mühle 22 austretenden, gewaschenen Feinteile 23 mit einer Grösse von einigen Millimetern Durchmesser werden nun direkt, in trockener, feuchter oder gar aufgeschlämmter Form dem grossen Anmaischbehälter 24 zugeleitet. Sinnvollerweise befindet sich dieser Anmaischbehälter 24 (unter anderem) unterhalb der Mühle 22, so dass die Beförderung der gewaschenen Feinteile 23 durch die Schwerkraft und nicht durch zusätzliche Fördermittel bewirkt werden muss.

Der Anmaischbehälter 24 weist eine Grösse auf, welche eine Pufferung von Diskontinuitäten im Zustrom von gewaschenen Feinteilen 23 gewährleisten kann. Die notwendige Grösse bemisst sich dabei insbesondere am Durchsatz der nachgeschalteten Zentrifuge 38, bzw. bei mehreren Zentrifugen an der Summe der Durchsätze der nachgeschalteten Zentrifugen 38. Pro Tonne Kunststoffgemisch welches pro Stunde durch die Zentrifuge 38 aufgetrennt wird, ist eine Grösse von 5 bis 500 m³ angezeigt. Insbesondere bevorzugt ist eine Dimensionierung im Bereich von 15 bis 40m³ pro Tonne Zentrifugendurchsatz an Kunststoffgemisch pro Stunde. D.h. bei Verwendung einer Zentrifuge 38 mit einem Standarddurchsatz von 1 t/h ist ein Anmaischbehälter 24 von 20m³ Aufnahmevolumen ganz besonders geeignet, bei der parallelen Verwendung von zwei solchen Zentrifugen entsprechend ein Anmaischbehälter 24 von ca. 40m³.

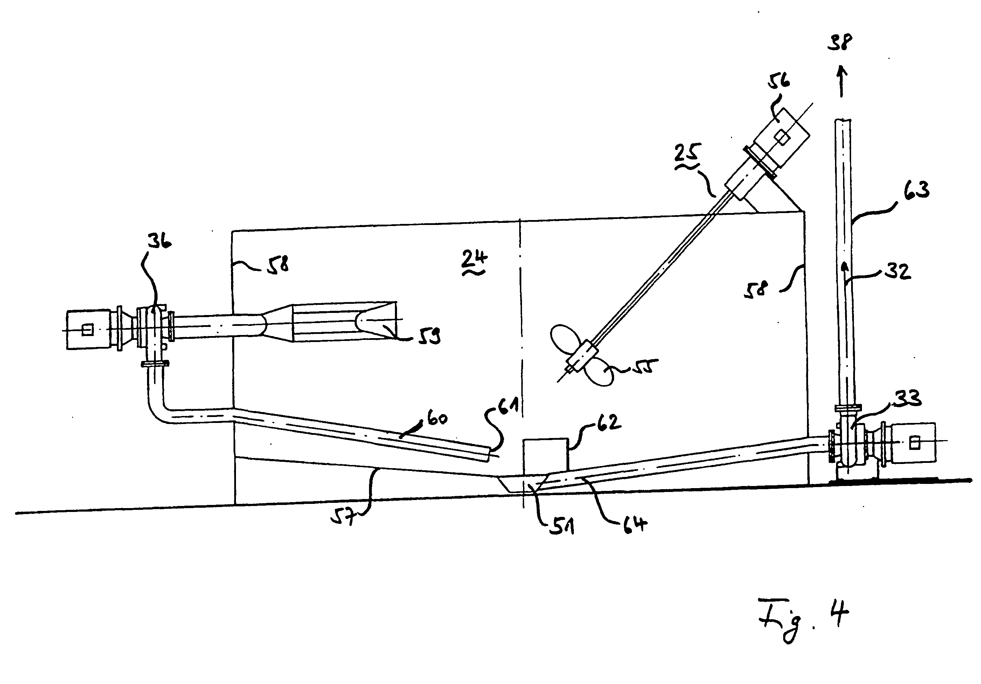

Wie zusätzlich in Figur 4 dargestellt, ist der Anmaischbehälter 24 mit Rührwerken 25 und Umwälzpumpen 36 ausgestattet. Diese ermöglichen sowohl eine kontrollierte und geregelte Suspendierung der Teile im Wasser, als auch bewirkt der damit verbundene Energieeintrag im Zusammenspiel mit der durch die Grösse des Behälters 24 langen mittleren Verweilzeit der Teilchen im Wasser eine weitere Reinigung. Dieser Reinigungseffekt kann soweit gehen, dass auf eine Vorreinigung mit einem Waschbad u.U. sogar verzichtet werden kann. Die Rührwerke 25 (z.B. Stöber, FDS 4085/B) sind als schräg in den Anmaischbehälter 24 eingreifende Schraubenrührer ausgebildet, welche Rührblätter 55 und einen Rührmotor 56 aufweisen. Die schräge exzentrische Anordnung gewährleistet eine gute Durchmischung ohne eine nachteilige grossvolumige Gesamtbewegung des Inhalts des Anmaischbehälters auszulösen. Ausserdem kann eine Waschpumpe 36 (Nord, SK 38 S 60) vorhanden sein, welche Flüssigkeit bzw. Suspension im oberen Bereich des Anmaischbehälters 24 über einen Ansaugstutzen 59 mit der Pumpe 36 ansaugt und mit grossem Druck in den Bodenbereich über ein Einpumprohr 60 einpumpt. Es ist von weiterem Vorteil, wenn im Bereich, wo die eingepumpte Suspension in den Bodenbereich eintritt, eine Prallwand 62 vorhanden ist, welche für eine zusätzliche Verwirbelung sorgt. Eine Umwälzung mit einer solchen Waschpumpe 36 ist angezeigt, da die Kunststoffpartikel meist eine geringere Dichte als Wasser aufweisen und also die Tendenz haben, an die Oberfläche des Behälters 24 aufzuschwimmen.

Der Boden 57 des Anmaischbehälters 24 ist konisch nach unten zulaufend gestaltet, und die Mündung 61 des Einpumprohrs 60 mündet im zentralen tiefen Bereich dieses konischen Bodens 57. Ebenso ist infolgedessen die Prallwand 62 in diesem tiefen Bereich angeordnet. Im tiefsten Bereich des Bodens 57, dem Bodenauslauf 51, wird mit einem Ansaugrohr 64 die Suspension 32 zur Beschickung der Zentrifuge 38 aus dem Anmaischbehälter 24 abgegriffen. Das Absaugen im tiefsten Punkt hat eine Reihe von Vorteilen:
Erstens sammeln sich so im Laufe des Betriebs der Zentrifuge keine Schwerteile im tiefsten Bereich des Anmaischbehälters an, da diese laufend abgeführt werden. Einer Verstopfung kann so effektiv entgegengewirkt werden.
Zweitens kann die Kunststoffteilchendichte in der Suspension im Bereich des Bodens optimal eingestellt werden. Da die Teilchen infolge ihrer geringeren Dichte als Wasser die Tendenz haben, an die Wasseroberfläche zu treiben, lässt sich über die Stärke der Umwälzung mit dem Rührwerk 25 und der Waschpumpe 36 diese Kunststoffteilchendichte im Bereich des Abgriffs leicht einstellen. So ist eine kontinuierliche und dosierte Beschickung der Zentrifuge 38 ermöglicht.
Drittens befinden sich im Bodenbereich bei Ausschalten der Umwälzung sowie ggf. zusätzlich der Rührwerke 25 im wesentlichen keine Kunststoffpartikel und es kann dann Wasser allein abgegriffen werden. Da es für das Anfahren der Zentrifuge notwendig ist, diese nur mit Wasser zu beschicken, ergibt sich so der Vorteil, dass das
Anfahren über dieselben Leitungen und Mittel möglich ist wie der Trennbetrieb, indem man einfach für das Anfahren Waschpumpe 36 und Rührwerk 25 ausschaltet, und dass auf eine separate Wasserzuführung zur Zentrifuge 38 für deren Anfahren verzichtet werden kann.

Der Anmaischbehälter 24 sollte ausserdem aus praktischen Gründen mit Mitteln versehen werden, welche einer Schaumbildung entgegenwirken. Dies ist beispielsweise durch ein grosses Verhältnis Oberfläche zu Volumen des Behälters 24 (beispielsweise über ein Verhältnis Höhe zu Durchmesser von ca. 1:2), oder durch mechanische Anordnungen zur Schaumverhinderung wie Rechen, Leitbleche oder ähnliches möglich. Ebenfalls kann der Schaumbildung durch geeignete Gestaltung des Grundrisses, beispielsweise elliptisch (Verhältnis lange zu kurze Hauptachse von 1.5:1 bis 2:1, Wellenbildung zerstört Schaum), durch eine Entschäumerpumpe 49, oder durch geeignete Temperierung des Wassers im Anmaischbehälter 24 oder durch eine Kombination der genannten Mittel entgegengewirkt werden.

Der Anmaischbehälter 24 besitzt ausserdem einen weiteren Ansaugstutzen, mit welchem über eine Pumpe 26 (Stöber, FDS4085/B) Rückführungsgut 27 abgezogen und direkt oder indirekt dem Waschbad 16 und/oder der Mühle 22 zugeführt werden kann.

Der Anmaischbehälter 24 ist vorzugsweise und wie auch dargestellt unmittelbar unterhalb der Zentrifuge 38 angeordnet. Möglichst ist der Behälter 24 ausserdem grösser in seinem Grundriss als die darüberliegende Zentrifuge 38. Auf diese Weise können alle Fluidströme, welche von der Zentrifuge 38 wieder zurück in den Anmaischbehälter 24 gelangen sollen, einfach und ohne Beförderungsmittel wie Pumpen zurückfliessen, dies ggf. sogar ohne spezielle Leitungen. Das Aufgabengut 32 für die Zentrifuge wird also im Bodenauslauf 51 von einer Pumpe 33 (Stöber, FDS4085/B) mit einem Ansaugrohr 64 abgesogen, und nach oben der Zentrifuge 38 zugeführt. Ein Umschaltventil 34 ermöglicht dabei eine unmittelbare Rezirkulation 35 in den Anmaischbehälter 24.

Bei der Zentrifuge 38 handelt es sich beispielsweise um die schon erwähnte Doppelkonus-Vollmantel-Schneckenzentrifuge des Typs CENSOR® (KHD Humboldt Wedag AG, Köln). Diese wird zentral mit Aufgabengut 32 beschickt, und das Gemisch wird durch die Zentrifugation in eine mit der Sinkgutzentrifugenschnecke 45 zum einen Ende der Zentrifuge 38 beförderte Sinkgut-Fraktion und in eine mit der Schwimmgutzentrifugenschnecke 41 zum anderen Ende beförderten Schwimmgut-Fraktion aufgetrennt. Die Zentrifugenschnecken 41 und 42 werden von einem Hauptantrieb 43 (Vectron, VC 400-090) angetrieben, und können bei Bedarf mit einem Backdrive 42 (Vectron, VC 400-045) reversiert werden. Meist handelt es sich bei der Schwimmgut-Fraktion um Polyolefine, bei der Sinkgutfraktion um Polystyrole und andere. Die Art der Auftrennung kann dabei gegebenenfalls über die Zugabe von Salz und die damit verbundene Änderung der Dichte der Flüssigkeit eingestellt werden. Ebenfalls ist es möglich, durch die Zugabe von Flockmittel einen weiteren Reinigungseffekt in der Zentrifuge 38 zu bewirken.

Die Schwimmgut-Fraktion 53 wird nach Austritt bei 39 von einer Schwimmgutschnecke 46 (Stöber, FDS 4040/B) mit Schurrenklappe erfasst und der weiteren Verarbeitung wie z.B. der Regranulierung 54 oder einer weiteren Auftrennung zugeführt. Die Sinkgut-Fraktion 52 wird von einer Sinkgutschnecke 45 erfasst, und von dieser in diesem Beispiel dem Schwergutabfall 47 zugeführt, es ist aber auch denkbar, dass auch diese Fraktion einer Regranulierung, einer weiteren Auftrennung oder anderen Weiterverarbeitung unterzogen wird.

Durch die vorteilhafte Anordnung von Anmaischbehälter 24 und Zentrifuge 38 übereinander und die Gestaltung des Anmaischbehälters kann die beim Anfahren und Runterfahren der Zentrifuge 38 aus ihrem Schwimmgut- und Sinkgutausgang konstruktionsbedingt austretende Trennflüssigkeit (65, 66) einfach in den Anmaischbehälter 24 zurückfliessen. Zur Ermöglichung dieses Rückflusses sind die beiden Austragsschnecken 45 und 46 nach unten in Richtung des Behälters 24 offen ausgestaltet und können zur Unterstüzung des Rückflusses auch noch reversiert werden. Jedenfalls wird auf diese einfache Weise sichergestellt, dass die austretende Trennflüssigkeit nicht den gleichen Weg wie das von ihr zuvor abgetrennte Sink-bzw. Schwimmgut nehmen kann.

### BEZEICHNUNGSLISTE

- 10: Pressballen
- 11: Ballenförderer
- 12: Shredder
- 13: Niederdrückerhydraulikaggregat
- 14: Dosierschnecke mit Gewichtserfassung
- 15: Förderband
- 16: Waschbad
- 17: Paddelwalzen
- 18: Schwergutrinne
- 19: Schwergutschnecke
- 20: Schwergutabfall
- 21: gewaschene Grobteile
- 22: Mühle
- 23: gewaschene Feinteile
- 24: Anmaischbehälter
- 25: Rührwerk
- 26: Pumpe
- 27: Rückführungsgut
- 28-31: Ventile
- 32: Aufgabengut Zentrifuge
- 33: Aufgabenpumpe
- 34: Umschaltventil
- 35: Zirkulationsgut
- 36: Waschpumpe
- 37: Zirkulationsgut bzw. Zentratflüssigkeit Zentrifuge
- 38: Zentrifuge
- 39: Schwimmgutausgang von 38
- 40: Sinkgutausgang von 38
- 41: Schwimmgutzentrifugenschnecke
- 42: Sinkgutzentrifugenschnecke
- 43: Hauptantrieb Zentrifuge
- 44: Backdrive Zentrifuge
- 45: Sinkgutschnecke
- 46: Schwimmgutschnecke
- 47: Abfall Schwergut/Sinkgut
- 48: Schwingungsüberwachung
- 49: Entschäumerpumpe
- 50: Auslauf Zentrifuge
- 51: Bodenauslauf von 24
- 52: Sinkgut
- 53: Schwimmgut
- 54: Regranulierung
- 55: Rührblätter
- 56: Rührmotor
- 57: Boden von 24
- 58: Seitenwand von 24
- 59: Ansaugstutzen von 36
- 60: Einpumprohr von 36
- 61: Ausgangsöffnung von 60
- 62: Prallwand
- 63: Leitung für 32
- 64: Ansaugrohr für 32
- 65: Trennflüssigkeit aus Sinkgutausgang
- 66: Trennflüssigkeit aus Schwimmgutausgang

## Patentansprüche

1. Vorrichtung, bestehend aus wenigstens einer auf Dichtetrennung beruhenden Zentrifuge (38) und einem Anmaischbehälter (24) zur Beschickung der Zentrifuge (38) mit einer Suspension (32) aus Wasser und zerkleinertem Kunststoffgemisch, **dadurch gekennzeichnet, dass** der Anmaischbehälter (24) eine Grösse im Bereich von 5 bis 500 m³ pro Tonne Zentrifugendurchsatz an Kunststoffgemisch pro Stunde aufweist.

2. Vorrichtung nach Anspruch 1, **dadurch gekennzeichnet, dass** der Anmaischbehälter (24) insbesondere bevorzugt eine Grösse im Bereich von 15 bis 40 m³ pro Tonne Zentrifugendurchsatz an Kunststoffgemisch pro Stunde aufweist.

3. Vorrichtung nach einem der Ansprüche 1 oder 2, **dadurch gekennzeichnet, dass** der Anmaischbehälter (24) zur Behinderung der Schaumbildung mit einem grossen Verhältnis Oberfläche zu Volumen, ausgedrückt bei kreisrunder Ausführung durch ein Verhältnis, Höhe zu Durchmesser von ca. 1:2, und/oder mit mechanischen Anordnungen zur Schaumverhinderung und/oder mit Mitteln zur Temperierung des Wassers versehen ist.

4. Vorrichtung nach einem der Ansprüche 1 bis 3, **dadurch gekennzeichnet, dass** wenigstens ein Rührwerk (25) vorgesehen ist, mit welchem das zerkleinerte Kunststoffgemisch im Anmaischbehälter (24) gleichmässiger verteilt werden kann.

5. Vorrichtung nach Anspruch 4, **dadurch gekennzeichnet, dass** der Anmaischbehälter (24) über Waschpumpe (36) zum Umpumpen der Suspension (32) aus seinem oberen Bereich in seinen Bodenbereich verfügt, sowie vorzugsweise über ein an die Waschpumpe angeschlossenes, im zentralen Bodenbereich des Behälters mündendes Einpumprohr (60), und wobei weiter vorzugsweise gegenüber der Ausgangsöffnung (61) des Einpumprohrs (60) eine Prallwand (62) angeordnet ist.

6. Vorrichtung nach einem der Ansprüche 1 bis 5, **dadurch gekennzeichnet, dass** der Anmaischbehälter (24) über Mittel zum Abgreifen der Suspension (32) zur Beschickung der Zentrifuge (38) im Bereich seines Bodens (57), insbesondere bevorzugt am tiefsten Punkt des Bodens, verfügt.

7. Vorrichtung nach Anspruch 6, **dadurch gekennzeichnet, dass** der Boden (57) des Anmaischbehälters (24) wenigstens teilweise konisch nach unten hin zulaufend ausgebildet ist, und dass die Mittel zum Abgreifen der Suspension (32) ein im zentralen, tiefsten Bereich der Spitze dieses Konus anschliessbares oder angeschlossenes Ansaugrohr (64) umfassen.

8. Vorrichtung zur Auftrennung von Kunststoffgemischen nach einem der Ansprüche 1 bis 7, **dadurch gekennzeichnet, dass** der Anmaischbehälter (24) unterhalb der wenigstens einen Zentrifuge (38) angeordnet ist, und dass aus der Zentrifuge (38) auslaufendes Zirkulationsgut (37) und/oder beim An- und Abfahren der Zentrifuge (38) am Sinkgut- sowie am Schwimmgutausgang anfallende Trennflüssigkeit (64, 65) durch die Schwerkraft nach unten in den Anmaischbehälter (24) fliessen kann/können.

9. Vorrichtung nach Anspruch 8, **dadurch gekennzeichnet, dass** eine Mühle (22) vorgesehen ist, welche mit einem wenigstens teilweise vorgereinigten und grobzerkleinertem Kunststoffgemisch (21) beschickt wird, dass Leitungen angeordnet sind, welche das aus der Mühle (22) austretende zerkleinerte Kunststoffgemisch (23) dem Anmaischbehälter (24) zuführen, und dass insbesondere bevorzugt die Mühle (22) oberhalb des Anmaischbehälters (24) angeordnet ist, so dass das zerkleinerte Kunststoffgemisch (23) infolge der Schwerkraft in den Anmaischbehälter (24) gelangt.

10. Vorrichtung nach Anspruch 9, **dadurch gekennzeichnet, dass** es sich bei der Mühle (22) um eine Waschmühle handelt, die neben Feststoffen (21) auch mit Flüssigkeit beaufschlagt ist, und dass diese Flüssigkeit aus dem Anmaischbehälter (24) entnommen wird.

11. Vorrichtung nach einem der Ansprüche 9 oder 10, **dadurch gekennzeichnet, dass** der Mühle (22) ein Shredder (12) sowie ggf. zusätzlich ein Waschbad (16) vorgeschaltet ist/sind.

12. Vorrichtung nach einem der Ansprüche 8 bis 11, **dadurch gekennzeichnet, dass** der Anmaischbehälter (24) direkt unterhalb der Zentrifuge angeordnet ist und eine Oberfläche aufweist, welche im wesentlichen gleich gross oder grösser als die Grundfläche der Zentrifuge (38) ist

13. Vorrichtung nach Anspruch 12, **dadurch gekennzeichnet, dass** die Abführung von Schwimmgut (53) aus der Zentrifuge (38) über eine vorzugsweise reversierbare Schwimmgutschnecke (46) und/oder die Abführung von Sinkgut (52) aus der Zentrifuge (38) über eine ebenfalls vorzugsweise reversierbare Sinkgutschnecke (45) erfolgt.

14. Verfahren zur Beschickung wenigstens einer auf Dichtetrennung beruhenden Zentrifuge unter Verwendung einer Vorrichtung gemäss einem der Ansprüche 8 bis 13, **dadurch gekennzeichnet, dass** beim Anfahren der Zentrifuge (38) der Inhalt des Anmaischbehälters (24) im wesentlichen ohne Durchmischung gehalten wird, derart dass das Kunststoffgemisch im oberflächennahen Bereich schwimmt, und dass zur Beschickung der Zentrifuge (38) im Bereich des Bodens (57) des Anmaischbehälters (24) über ein Ansaugrohr (64) im wesentlichen kunststoffgemischfreies Wasser abgegriffen wird.

15. Verfahren nach Anspruch 14 unter Verwendung einer Vorrichtung gemäss Anspruch 13 mit reversierbaren Schnecken (45,46), **dadurch gekennzeichnet, dass** beim Anfahren oder Runterfahren der Zentrifuge die Schnecken (45,46) reversiert werden.

16. Verfahren nach einem der Ansprüche 14 oder 15, **dadurch gekennzeichnet, dass** die Zentrifuge (38) zusätzlich als Wasserreinigungsaggregat verwendet wird, indem Flockmittel eingeimpft wird.

## Claims

1. Device, comprising at least one centrifuge (38) based on density separation, and a slurry container (24) for charging the centrifuge (38) with a suspension (32) of water and comminuted plastic mixture, **characterized in that** the slurry container (24) has a size in the range from 5 to 500 m³ per tonne of centrifuge throughput of plastic mixture per hour.

2. Device according to Claim 1, **characterized in that** the slurry container (24) has with particular preference a size in the range from 15 to 40 m³ per tonne of centrifuge throughput of plastic mixture per hour.

3. Device according to either of Claims 1 and 2, **characterized in that**, to hinder foam formation, the slurry container (24) is provided with a great surface to volume ratio, expressed in the case of a circular configuration by a height to diameter ratio, of about 1:2, and/or with mechanical arrangements for foam prevention and/or with means for controlling the temperature of the water.

4. Device according to one of Claims 1 to 3, **characterized in that** at least one agitator (25) is provided, with which the comminuted plastic mixture can be distributed more uniformly in the slurry container (24).

5. Device according to Claim 4, **characterized in that** the slurry container (24) has a washing pump (36) for pumping the suspension (32) out of its upper region into its bottom region, and also preferably has a pumping-in pipe (60), which is connected to the washing pump and opens out in the central bottom region of the container, and furthermore there is preferably a baffle wall (62) arranged opposite the outlet opening (61) of the pumping-in pipe (60).

6. Device according to one of Claims 1 to 5, **characterized in that** the slurry container (24) has means for tapping the suspension (32) for charging the centrifuge (38) in the region of its bottom (57), with particular preference at the lowest point of the bottom.

7. Device according to Claim 6, **characterized in that** the bottom (57) of the slurry container (24) is formed at least partly tapering conically downward, and **in that** the means for tapping the suspension (32) comprises an intake pipe (64) which can be connected or is connected in the central, lowest region of the tip of this cone.

8. Device for separating plastic mixtures according to one of Claims 1 to 7, **characterized in that** the slurry container (24) is arranged underneath the at least one centrifuge (38), and **in that** circulated material (37) running out from the centrifuge (38) and/or separated liquid (65, 66) occurring at the settling material outlet and at the floating material outlet during the starting up and shutting down of the centrifuge (38) can flow downwards into the slurry container (24) under the effect of gravitational force.

9. Device according to Claim 8, **characterized in that** a mill (22) is provided, which is charged with at least partly precleaned and coarsely comminuted plastic mixture (21), **in that** lines are arranged, which feed the comminuted plastic mixture (23) emerging from the mill (22) to the slurry container (24), and **in that**, with particular preference, the mill (22) is arranged above the slurry container (24), so that the comminuted plastic mixture (23) goes into the slurry container (24) as a result of the gravitational force.

10. Device according to Claim 9, **characterized in that** the mill (22) is a washing mill, to which not only solids (21) but also liquid is admitted, and **in that** this liquid is taken from the slurry container (24).

11. Device according to either of Claims 9 and 10, **characterized in that** a shredder (12) and, if appropriate, additionally a washing bath (16) is/are arranged upstream of the mill (22).

12. Device according to one of Claims 8 to 11, **characterized in that** the slurry container (24) is arranged directly underneath the centrifuge and has a surface which is substantially of the same size or larger than the base area of the centrifuge (38).

13. Device according to Claim 12, **characterized in that** the discharge of floating material (53) from the centrifuge (38) takes place by means of a preferably reversible floating material screw (46) and/or the discharge of settling material (52) from the centrifuge (38) takes place by means of a likewise preferably reversible settling material screw (45).

14. Method for charging at least one centrifuge, based on density separation, using a device according to one of Claims 8 to 13, **characterized in that**, when starting up the centrifuge (38), the content of the slurry container (24) is held substantially without mixing in such a way that the plastic mixture in the region near the surface floats, and **in that**, for charging the centrifuge (38), water that is substantially free from plastic mixture is tapped in the region of the bottom (57) of the slurry container (24) by means of an intake pipe (64).

15. Method according to Claim 14 using a device according to Claim 13 with reversible screws (45, 46), **characterized in that**, when starting up or running down the centrifuge, the screws (45, 46) are reversed.

16. Method according to either of Claims 14 and 15, **characterized in that** the centrifuge (38) is additionally used as a water cleaning unit, **in that** flocculant is injected.

## Revendications

1. Dispositif, constitué d'au moins une centrifuge, basée sur la séparation par densité (38) et d'une cuve de trempage (24) en vue du chargement de la centrifuge (38) avec une suspension (32) faite d'eau et de mélange de matières synthétiques fragmenté, **caractérisé en ce que** la cuve de trempage (24) présente une grandeur dans le domaine de 5 à 500 m³ par tonne de débit de centrifuge en mélange de matières synthétiques par heure.

2. Dispositif selon la revendication 1, **caractérisé en ce que** la cuve de trempage (24) présente, en particulier, de préférence, une grandeur dans le domaine de 15 à 40 m³ par tonne de débit de centrifuge en mélange de matières synthétiques par heure.

3. Dispositif selon l'une quelconque des revendications 1 ou 2, **caractérisé en ce que** la cuve de trempage (24) est pourvue, en vue de l'empêchement de la formation de mousse, d'un grand rapport surface à volume, exprimé par une exécution en forme circulaire par un rapport hauteur à diamètre d'environ 1:2, et/ou est munie d'arrangements mécaniques en vue de l'empêchement de la mousse et/ou est munie de moyens en vue de l'équilibrage en température de l'eau.

4. Dispositif selon l'une quelconque des revendications 1 à 3, **caractérisé en ce que** l'on prévoit au moins un agitateur (25), grâce auquel le mélange de matières synthétiques fragmenté peut être réparti dans la cuve de trempage (24) d'une manière uniforme.

5. Dispositif selon la revendication 4, **caractérisé en ce que** la cuve de trempage (24) dispose de pompes de lavage (36) en vue du pompage de la suspension (32) de son domaine supérieur à son domaine de fonds ainsi que, de préférence, d'un tube de pompe d'entrée (60), débouchant dans le domaine central du fonds de la cuve, raccordée à la pompe de lavage et **en ce qu'**une paroi d'impact (62) est disposée en outre, de préférence, en face de l'ouverture de sortie (61) du tube de pompe d'entrée (60).

6. Dispositif selon l'un des revendications 1 à 5, **caractérisé en ce que** la cuve de trempage (24) dispose de moyens en vue de la ponction de la suspension (32) pour le chargement de la centrifuge (38), dans le domaine de son fond (57), en particulier, de préférence, au point le plus bas du fond.

7. Dispositif selon la revendication 6, **caractérisé en ce que** le fond (57) de la cuve de trempage (24) est formée au moins partiellement de manière conique en allant vers la bas, et **en ce que** les moyens en vue de la ponction de la suspension (32) comprennent un tube d'aspiration (64), raccordable ou raccordé dans la région centrale la plus basse de la pointe de ce cône.

8. Dispositif en vue de la séparation de mélanges de matières synthétiques selon l'une quelconque des revendications 1 à 7, **caractérisé en ce que** la cuve de trempage (24) est disposée en dessous de la au moins une centrifuge (38), et **en ce que** le produit de circulation (37) s'écoulant hors de la centrifuge (38) et/ou le liquide de séparation (65,66), se formant lors du démarrage et de la mise à l'arrêt de la centrifuge (38) à la sortie des produits plongeants ainsi qu'à la sortie des produits flottants peut/peuvent s'écouler vers le bas dans la cuve de trempage (24) sous l'effet de la pesanteur.

9. Dispositif selon la revendication 8, **caractérisé en ce que** l'on prévoit un moulin (22) qui est chargé d'un mélange de matières synthétiques (21) au moins partiellement pré-nettoyé et fragmenté grossièrement, **en ce que** des conduits sont disposés qui conduisent le mélange de matières synthétiques fragmenté (23), sortant du moulin (22), vers la cuve de trempage (24), et **en ce que**, en particulier, de préférence, le moulin (22) est disposé au dessus de la cuve de trempage (24), de telle sorte que le mélange de matières synthétiques fragmenté (23) parvient dans la cuve de trempage (24) sous l'effet de la pesanteur.

10. Dispositif selon la revendication 9, **caractérisé en ce qu'**il s'agit, dans le cas du moulin (22), d'un moulin de lavage, qui est sollicité, en sus des substances solides (21), également par un liquide et **en ce que** ce liquide est prélevé hors de la cuve de trempage (24).

11. Dispositif selon l'une quelconque des revendications 9 ou 10, **caractérisé en ce que** l'on intercale avant le moulin (22) un déchiqueteur (12) ainsi que, le cas échéant, en plus un bain de lavage (16).

12. Dispositif selon l'une quelconque des revendications 8 à 11, **caractérisé en ce que** la cuve de trempage (24) est disposée directement en dessous de la centrifuge et présente une surface, qui est, pour l'essentiel, aussi grande ou plus grande que la surface de base de la centrifuge (38).

13. Dispositif selon la revendication 12, **caractérisé en ce que** l'évacuation des produits flottants (53) hors de la centrifuge (38) se fait par l'intermédiaire d'une vis de produits flottants, de préférence réversible (46), et/ou **en ce que** l'évacuation des produits plongeants (52) hors de la centrifuge (38) se fait par l'intermédiaire d'une vis de produits plongeants, de préférence également réversible (45).

14. Procédé en vue du chargement d'au moins une centrifuge basée sur la séparation par densité, par utilisation d'un dispositif selon l'une quelconque des revendications 8 à 13, **caractérisé en ce que**, lors de la mise en marche de la centrifuge (38), le contenu de la cuve de trempage (24) est maintenu essentiellement sans mélange, de telle sorte que le mélange de matières synthétiques flotte dans le domaine proche de la surface et **en ce que**, en vue du chargement de la centrifuge (38), dans le domaine du fond (57) de la cuve de trempage (24), on prélève par l'intermédiaire d'un tube d'aspiration (64), de l'eau pour l'essentiel exempte de mélange de matières synthétiques.

15. Procédé selon la revendication 14 par utilisation d'un dispositif selon la revendication 13, ayant des vis réversibles (45,46), **caractérisé en ce que**, lors de la mise en marche ou de la mise à l'arrêt de la centrifuge, on inverse les vis (45,46).

16. Procédé selon l'une quelconque des revendications 14 ou 15, **caractérisé en ce que** la centrifuge (38) est utilisée en outre en tant qu'unité de nettoyage à l'eau, par le biais d'un ensemencement à l'aide d'agents de floculation.
